Europäisches Patentamt

(19) **European Patent Office**

**Office européen des brevets**

(11) Numéro de publication: **0 094 865**

**A2**

(12) # DEMANDE DE BREVET EUROPEEN

(21) Numéro de dépôt: **83400893.0**

(22) Date de dépôt: **03.05.83**

(51) Int. Cl.³: **H 04 L 7/10**
**H 04 L 7/02**

(30) Priorité: **14.05.82 FR 8208484**

(43) Date de publication de la demande:
**23.11.83 Bulletin 83/47**

(84) Etats contractants désignés:
**DE GB SE**

(71) Demandeur: **THOMSON-CSF TELEPHONE**
**146, Boulevard de Valmy**
**F-92707 Colombes(FR)**

(72) Inventeur: **BUENO, Serge**
**THOMSON-CSF SCPI 173, bld Haussmann**
**F-75379 Paris Cedex 08(FR)**

(74) Mandataire: **Desperrier, Jean-Louis et al,**
**THOMSON-CSF SCPI 173, Bld Haussmann**
**F-75379 Paris Cedex 08(FR)**

(54) **Emetteur et récepteur de données en mode paquet.**

(57) La présente invention concerne un émetteur et un récepteur de données en mode paquet pour une transmission à haut débit d'information.

Elle consiste à réaliser un émetteur comprenant un codeur (100) et un générateur d'impulsions (101) pour émettre un signal constitué par des paquets espacés par des silences pendant lesquels sont transmises des impulsions générées à un rythme donné définissant le débit de la transmission d'information; et un récepteur comprenant un circuit de détection de signaux (103) permettant de discriminer ces impulsions et de prendre en compte ces impulsions à l'aide d'une horloge interne, un circuit d'échantillonnage permettant d'échantillonner (104) les paquets détectés à l'aide de signaux d'horloge appropriés, un circuit de sélection et de mémorisation (105) permettant de sélectionner le signal d'horloge le mieux adapté au traitement.

Application à la transmission de données par paquet.

EP 0 094 865 A2

./...

Fig.1

## EMETTEUR ET RECEPTEUR DE DONNEES EN MODE PAQUET

La présente invention se rapporte aux émetteurs et aux récepteurs de données en mode paquet.

Pour être acheminée, toute information doit être mise sous forme de symboles. La signification de ces symboles est fondamentale, mais est une pure affaire de convention entre l'émetteur de l'information et le récepteur destinataire.

De très nombreuses procédures de codage sont connues et permettent le dialogue entre un émetteur et un récepteur. On choisit le code en fonction du débit que l'on veut obtenir.

A cette notion de codage s'ajoute un autre concept qui est le mode de transmission. La transmission en mode paquet est un mode de transmission de données numériques dans lequel les données numériques à transmettre sont groupées en blocs ou paquets, et associées à l'intérieur de chaque paquet à des informations de routage (ou acheminement), l'ensemble étant organisé selon un format déterminé. Chaque paquet comprend un ensemble de mots ayant un nombre d'éléments binaires (bits) déterminé.

Généralement, le récepteur destiné à recevoir les données dispose d'un circuit de synchronisation dont la structure dépend du code utilisé et qui permet de se synchroniser sur les instants significatifs de la base de temps de l'émetteur.

Les circuits de synchronisation présentent généralement deux inconvénients, l'un étant leur complexité et par conséquent leur coût, l'autre étant la limite du débit binaire qui est dans notre cas le débit d'information, ce débit étant fonction du code utilisé pour la transmission.

On appelle débit d'information la fréquence d'émission des paquets successifs.

Le code le mieux adapté à une transmission à haut débit est le code NRZ (non retour à zéro). Ce code dans lequel les données apparaissent comme une succession de 0 et de 1, ne transporte pas de signal d'horloge en même temps que ces données, il faut donc que le récepteur qui reçoit ces données se synchronise sur chaque élément binaire ou que le signal d'horloge soit transmis sur une autre ligne.

2

Lorsque l'émetteur et le récepteur sont éloignés, ce qui est le cas dans les systèmes de transmission de données, l'utilisation du code NRZ pose des difficultés au niveau de la synchronisation. En effet, la durée de chaque élément binaire qui est fonction du débit est trop courte dans ce cas et ne laisse pas le temps à l'horloge du récepteur de se caler sur chaque bit. Il y a par conséquent des déphasages qui s'introduisent et qui faussent la synchronisation.

De même, lorsque le signal d'horloge est transporté sur une autre ligne, la vitesse de propagation des signaux sur chaque ligne n'étant pas identique, il se produit également un déphasage entre le signal de données et le signal d'horloge qui de ce fait n'a plus aucune signification.

Pour remédier à ce problème la présente invention propose un émetteur et un récepteur, ayant une structure permettant d'obtenir un haut débit, le code le mieux adapté à la ligne étant dans ce cas le code NRZ (non retour à zéro) ; le récepteur comportant un circuit de synchronisation qui lui permet de se synchroniser à partir du signal reçu à l'aide d'une horloge interne qui génère un ensemble de signaux aptes à permettre la détection de l'arrivée des paquets de données, cette détection étant déclenchée par la réception d'impulsions caractéristiques émises par l'émetteur entre deux paquets.

Pour obtenir ce résultat, l'invention propose un émetteur de données en mode paquet, caractérisé en ce qu'il comprend :
- un codeur pour émettre un premier signal constitué par des paquets de données successifs espacés par un intervalle de temps dont la durée est fonction de la durée d'un élément du paquet, chaque paquet étant précédé par un signal de départ et comportant un nombre entier d'élément, chaque élément étant constitué par un octet ;
- un générateur d'impulsions pour émettre un deuxième signal constitué d'impulsions générées à un rythme d'horloge donné, au moins une impulsion étant émise pendant chaque intervalle de temps séparant deux paquets successifs.

Les objets et caractéristiques de l'invention apparaîtront plus clairement à la lecture de la description suivante d'un exemple de réalisation, ladite description étant faite en relation avec les dessins ci-annexés dans lesquels :

- la figure 1, est un schéma synoptique de l'émetteur et du récepteur conforme à l'invention ;

- la figure 2, est un schéma détaillé de l'émetteur conforme à l'invention ;

- les figures 3, 4 et 5, représentent les schémas détaillés respectivement du détecteur d'impulsions, du circuit d'échantillonnage et du circuit de sélection et de mémorisation de la figure 1 ;

- la figure 6, est un diagramme des signaux émis par l'émetteur ;

- la figure 7, est un diagramme des signaux émis par l'émetteur suivant une réalisation particulière ;

- la figure 8, est un diagramme des temps montrant le déroulement du traitement d'un paquet par le récepteur représenté sur les figures 2, 3 et 4.

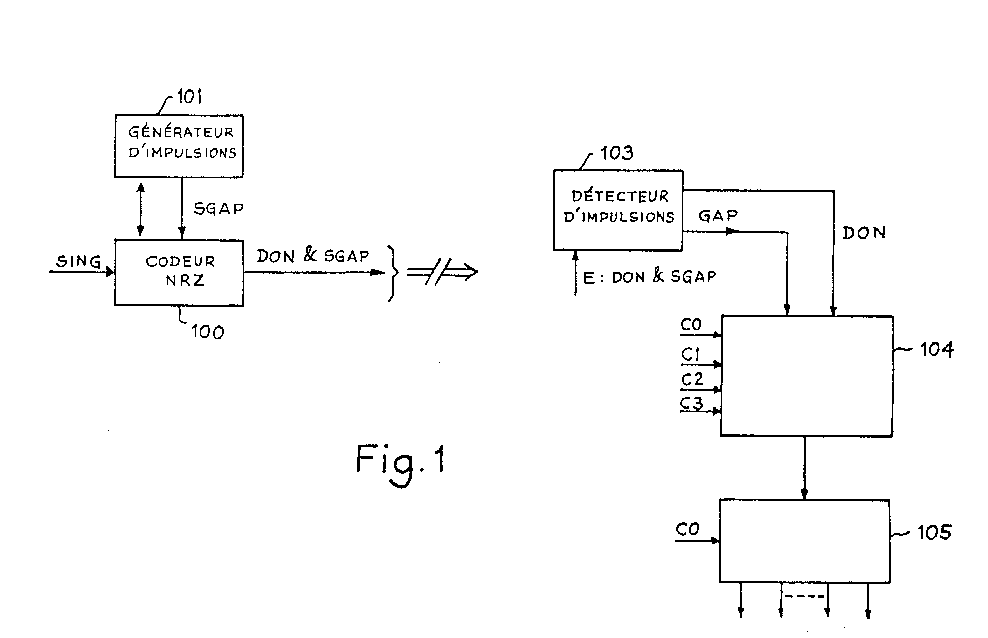

Sur la figure 1 on a représenté un émetteur et un récepteur selon l'invention.

L'émetteur émet un signal DON constitué par des paquets de données, successifs et espacés par un silence dont la durée est variable mais pas quelconque. Cette durée est fonction de la durée d'un octet, chaque paquet comportant au moins un octet. Les silences se traduisent, au niveau de la réception, par un état logique fonction de la caractéristique électrique de la ligne de transmission liant l'émetteur au récepteur.

Pour émettre le signal DON, l'émetteur comprend un codeur NRZ 100 (non retour à zéro) qui code le signal SING qu'il reçoit suivant le code NRZ et délivre ce signal de données DON. Ce signal DON est constitué par des paquets de données dont chaque élément binaire (bit) a un état logique 0 ou 1.

Chaque paquet comprend un nombre entier d'octets (un octet comprend 8 bits) et est précédé par un élément de début constitué par un doublet "1,0". Ce doublet annonce par conséquent le début d'un paquet.

Un générateur d'impulsions 101 génère un signal SGAP constitué d'impulsions générées à un rythme d'horloge donné HO, ce rythme étant fonction de la durée maximale que peut avoir un paquet. Une ou plusieurs

4

impulsions peuvent apparaitre pendant l'intervalle de temps séparant deux paquets successifs, cet intervalle étant au minimum égal à la durée d'un octet. Ces impulsions apparaissent donc avant l'élément de début d'un paquet qui suit, et à un instant déterminé de façon à avoir un intervalle de temps constant entre l'impulsion et l'élément de début.

Les impulsions de ce signal SGAP peuvent être transmises sur la même ligne de transmission qui porte le signal de données DON; ou bien sur une autre ligne. La deuxième solution ne présentant pas beaucoup d'intérêt on détaillera d'avantage la première. Le signal résultant émis sur un seul support est référencé E. Suivant cette première solution, les impulsions de ce signal étant transmises sur la même ligne que le signal de données, elles auront une durée par exemple égale à la durée de 1 bit et $\frac{1}{2}$, ce qui permettra à la réception, de les discriminer par leur longueur.

Le signal E émis par l'émetteur est reçu par le récepteur qui va l'échantillonner.

Pour cela le récepteur dispose de quatre signaux d'horloge C0, C1, C2, C3 décalés les uns par rapport aux autres d'un retard R constant. La fréquence des signaux CO et HO est la même. Le retard R est fonction de la durée d'un bit de l'élément de début.

Un circuit de détection de signaux 103 reçoit le signal E et détecte les impulsions précédant un paquet. Dès qu'une impulsion a été détectée elle est transmise sur une impulsion de l'horloge C0 à un circuit d'échantillonnage 104. Ces impulsions sont référencées par le signal GAP sur la figure 1.

Le circuit d'échantillonnage 104 reçoit les impulsions GAP, le signal de données et les horloges C0-C3. Dès qu'il reçoit une impulsion GAP, il est prêt à recevoir l'élément de début d'un paquet. Comme le décalage des horloges C0-C3 est égal à 1/4 de la durée d'un bit d'élément de début, il y a au moins une horloge parmi les quatre qui permet de prendre en compte cet élément. Le paquet de donnée suivant l'élément de début détecté, est mémorisé.

Un circuit de sélection et de mémorisation 105 reçoit les données échantillonnées de chaque paquet en série et les délivre en parallèle au rythme de l'horloge C0.

5

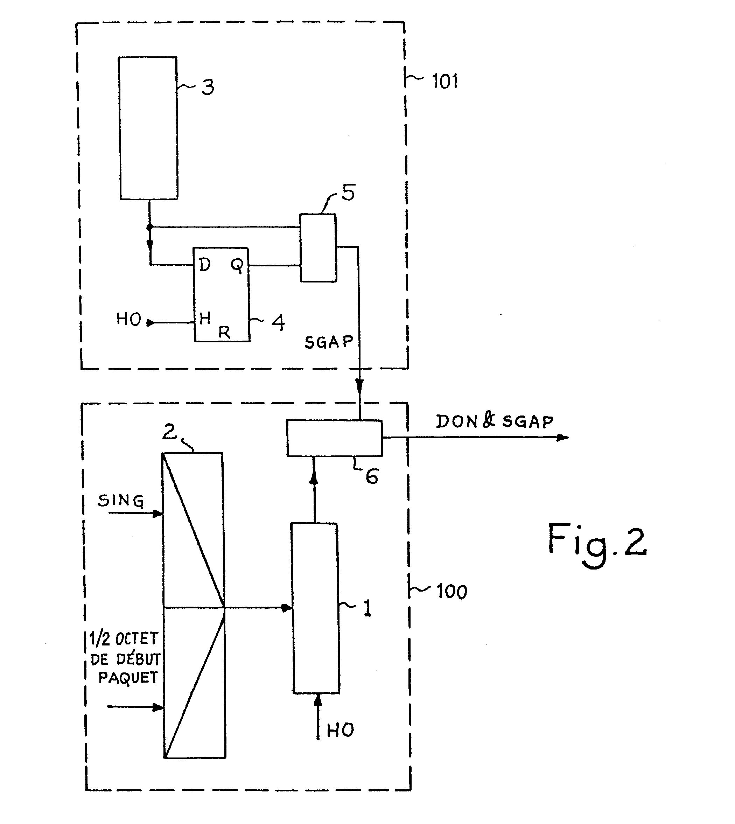

Sur la figure 2 on a représenté une réalisation particulière de l'émetteur conforme à l'invention.

L'émission des octets utiles du signal SING, c'est-à-dire l'émission du signal de données sans les bits de début et de fin, s'effectue en chargeant un registre parallèle-série 1 et en décalant ce signal au rythme de l'horloge HO. Ce chargement s'effectue par l'intermédiaire d'un multiplexeur 2 qui reçoit les octets utiles du signal SING et le demi-octet (c'est-à-dire les bits 4 à 8) de l'élément de silence dans lequel se trouve le doublet de l'élément de début précédant un paquet.

L'émission des octets de silence diffère selon que l'octet est suivi ou non d'un paquet de données. Seul le demi-octet comprenant les bits de 0 à 3 c'est-à-dire le $\frac{1}{2}$ octet comprenant l'impulsion SGAP est identique dans les deux cas.

Ce demi-octet est élaboré par un registre parallèle série 3 chargé et une bascule D 4 attaquée par le front descendant du signal HO.

Une porte "ET" 5 délivre l'impulsion du signal SGAP aux instants significatifs.

Un sélecteur 6 reçoit le premier demi-octet d'un élément de silence et le deuxième demi-octet de cet élément qui est suivi ou non d'un paquet.

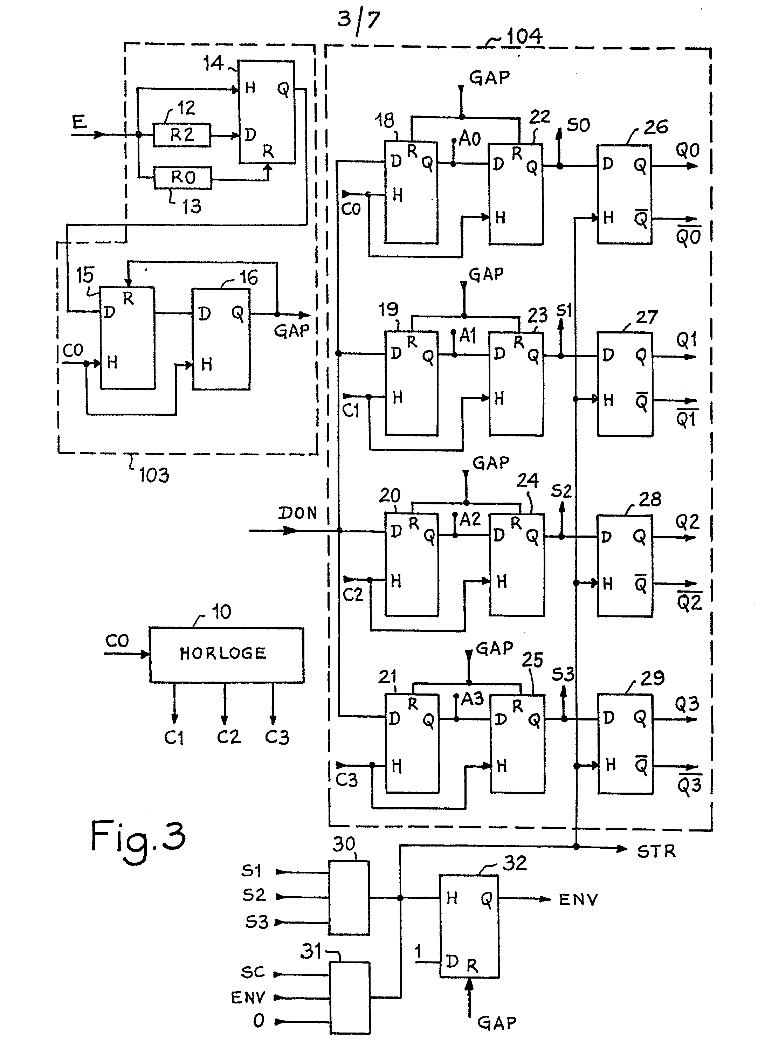

Sur la figure 3 on a représenté une réalisation particulière des circuits de réception selon l'invention.

Le récepteur comprend un générateur de rythme non représenté, délivrant le signal d'horloge C0. A partir de ce signal C0, on crée à l'aide d'une ligne à retard 10, les trois autres signaux d'horloge C1, C2, C3 retardés d'une durée R.

Le détecteur de signaux 103 permet de détecter les impulsions SGAP émises pendant les silences entre deux paquets consécutifs.

Selon la première variante les impulsions SGAP sont transmises avec le signal de données sur la même ligne. Ces impulsions ont une durée égale à celle de 1 bit et $\frac{1}{2}$, soit R1 cette durée. Pour discriminer ces impulsions on utilise deux lignes à retard 12 et 13. La ligne à retard 12 retarde les impulsions SGAP d'une durée R2, la ligne à retard 13 retarde les impulsions SGAP d'une durée R0 ; la durée R1 est comprise entre R0 et R2, ce qui laisse une fenêtre suffisamment grande pour recevoir le

6

deuxième front des impulsions SGAP.

Une bascule D 14 permet ensuite de prendre en compte ces impulsions du signal SGAP au rythme ou elles arrivent. La sortie Q de cette bascule est reliée à l'entrée d'une autre bascule D 15 qui est activée par le signal d'horloge C0, et qui délivre donc à sa sortie Q les impulsions GAP sur une impulsion de l'horloge C0.

Les entrées de données et d'horloge (D et H) n'étant pas synchrones, il y a des risques d'obtenir une sortie instable, ce qui n'est pas désirable lorsqu'on utilise cette sortie pour activer d'autres circuits à des instants significatifs.

Pour remédier à cette difficulté on utilise de façon classique une deuxième bascule D 16 qui reçoit à l'entrée D la sortie Q de la bascule 15 précédente et qui est activée par la même horloge C0. On obtient ainsi un circuit anti-instabilité, la sortie de la deuxième bascule 15 délivrant ainsi un signal GAP synchronisé par l'horloge C0.

Le circuit d'échantillonnage 104 reçoit le signal de données DON et détecte l'élément de début pour chaque paquet à l'aide des quatre signaux d'horloge décalés C0-C3, et mémorise le paquet de données succédant à cet élément de début, puis délivre en série les éléments du paquet.

Un ensemble de quatre bascules D 18-21 dont chacune est activée respectivement par les signaux C0-C3, et reçoit à l'entrée D le signal de données DON. L'entrée R (reset) est activée par le signal GAP. Les signaux d'horloges étant décalés d'un intervalle de temps R, les bascules sont activées successivement les unes par rapport aux autres au bout d'un intervalle de temps R, la dernière bascule activée est activée au bout d'un intervalle de temps égal à quatre fois R par rapport à la première. Or comme R a été choisi pour que 4 x R soit approximativement égal à la durée d'un bit d'élément de début, il y a donc au moins trois bascules qui ont mémorisé le bit "1" de l'élément de début.

Comme les entrées de données D et l'entrée d'horloge H reçoivent des signaux asynchrones il y a également un risque d'instabilité. Quatre autres bascules D 22-25 sont associées respectivement aux premières pour éviter d'avoir des états instables aux sorties Q. Ces bascules reçoivent le signal GAP à l'entrée R (reset), elles reçoivent à l'entrée H, le même signal d'horloge que la bascule à laquelle elles sont associées et leur entrée D reçoit respectivement le signal de sortie A0-A3 de ces bascules.

Pour des raisons de sécurité, ce n'est pas la bascule activée la première par l'un des signaux d'horloge et pour laquelle la sortie aura délivré le bit de début qui sera prise en compte. On prendra en compte la sortie de la bascule qui aura été activée par le signal d'horloge décalé de R par rapport au signal précédent. On sélectionne ce deuxième signal d'horloge pour échantillonner le paquet reçu.

La fin d'activation des bascules est signalée par la détection d'une nouvelle impulsion GAP qui déclenche une nouvelle sélection du signal d'horloge qui permet d'échantillonner le paquet de données suivant.

Un groupe de quatre autre bascules D 26-29 permet de mémoriser l'état des bascules 22-25 après la détection du premier élément de début sous l'action d'un signal d'horloge STR obtenu à partir de l'état des sorties d'au moins trois de ces bascules. Ce signal d'horloge STR ne réactive pas les bascules 26-25 pendant toute la durée du passage du paquet pour ne pas provoquer une deuxième mémorisation pendant le passage de ce paquet.

Le verrouillage du signal STR est effectué au moyen de deux portes "OU" 30-31 recevant à l'entrée les signaux de sortie des bascules 22-25 avant la mémorisation dans les bascules 26-29. La sortie de ces portes 30-31 est appliquée à l'entrée d'horloge d'une bascule D 32 sur laquelle on bloque l'entrée de donnée D à 1, l'entrée de sélection R reçoit le signal GAP. La sortie de cette bascule 32 génère un signal de verrouillage VER appliqué à l'entrée de l'une des deux portes "OU" 31.

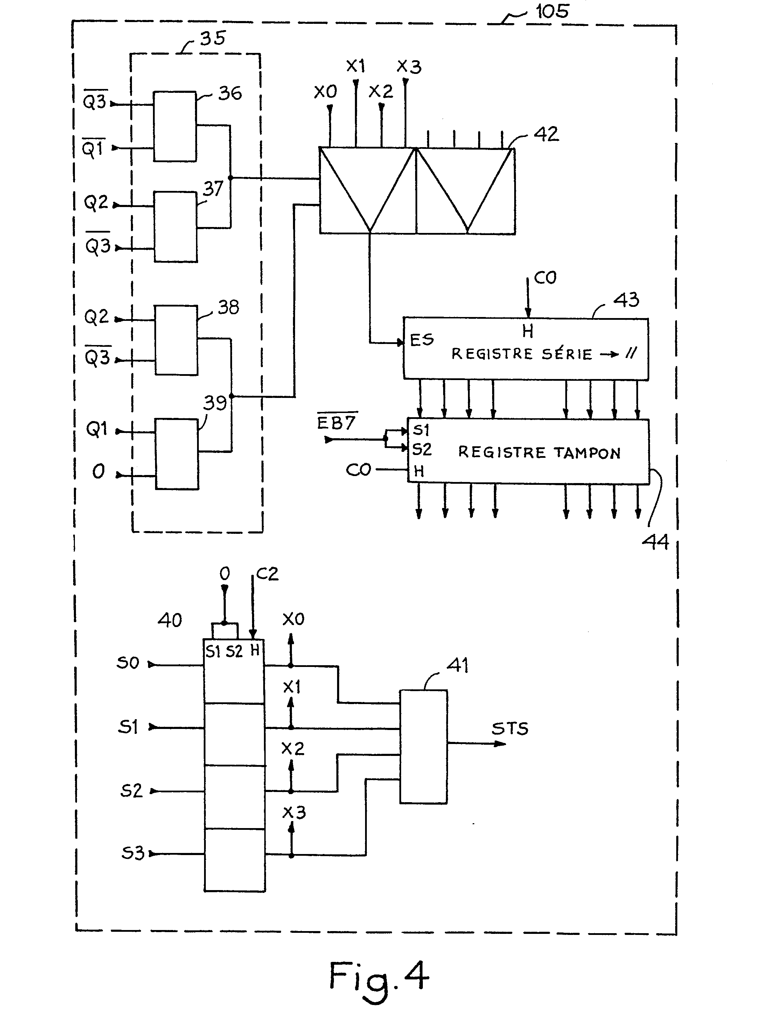

Sur la figure 4 on a représenté le circuit de sélection et de mémorisation 105.

Un circuit de sélection de sortie 35 est relié aux sorties des bascules 26-29. Il permet de ne prendre en compte que l'une des sorties des trois bascules qui ont reçu le bit de l'élément de début ; cette sortie étant bien déterminée puisqu'elle désigne le signal d'horloge qui a été choisi pour l'échantillonnage du paquet reçu.

Ce circuit 35 comprend dans notre réalisation particulière quatre portes "ET" 36-39 à deux entrées et une sortie.

8

La porte 36 reçoit les signaux de sortie $\bar{Q}$ des bascules 27 et 29. La porte 37 reçoit le signal de sortie Q de la bascule 28 et le signal $\bar{Q}$ de la bascule 29. La porte 38 reçoit le signal de sortie Q de la bascule 28 et le signal $\bar{Q}$ de la bascule 29. La porte 39 reçoit le signal de sortie Q de la bascule 27.

Un registre 40, à quatre entrées reçoit à ses entrées respectivement les signaux de sorties S0-S3 des bascules 22-25. Son entrée d'horloge est activée par le signal C2. Les sorties X0, X1, X2, X3 du registre 40 sont appliquées respectivement aux entrées d'une porte "OU" 41. Après chaque détection de paquet, ce registre 40 délivre à ses sorties, au rythme de l'horloge C2, les bits du paquet détecté.

Un sélecteur 42 à quatre entrées, reçoit les quatre sorties du registre 40. Pour sélectionner l'entrée désirée on active les deux entrées de sélection A et B du sélecteur 42 par les sorties des portes "ET". La sortie de la porte 36 et de la porte 37 sont réunies et activent l'entrée A. La sortie de la porte 38 et de la porte 39 sont réunies et activent l'entrée B. La combinaison des quatre états que peut prendre le doublet AB permet de sélectionner une entrée parmi quatre.

L'équation logique de l'entrée A correspond à :

$$A = Q2\ \overline{Q3} + \overline{Q1}\ \overline{Q3}$$

et l'équation logique de l'entrée B correspond à :

$$B = Q1 + Q2\ \overline{Q3}$$

Q1, Q2, Q3 étant respectivement les sorties Q des bascules 27, 28, 29, $\overline{Q1}$, $\overline{Q2}$, $\overline{Q3}$ étant respectivement les sorties $\bar{Q}$ (inverse de Q) de ces bascules.

Ces équations permettent donc de ne sélectionner que la sortie de la deuxième bascule (deuxième dans le temps) qui a enregistré le bit de l'élément de début.

Ce sélecteur 42 permet de délivrer chaque bit du paquet en série.

Un registre 43 convertisseur série-parallèle se remplit au rythme de l'horloge C0.

Un registre tampon 44 reçoit les bits du paquet transmis en parallèle par le registre convertisseur 42. Il est activé par un signal $\overline{EB7}$ résultant d'un comptage de bits.

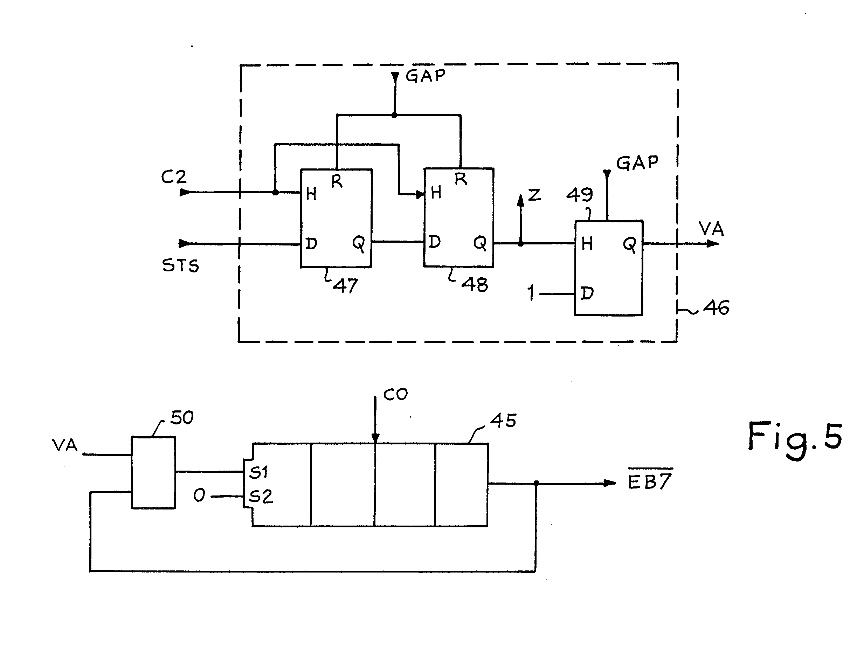

Sur la figure 5 on a représenté un compteur de bit 45 qui délivre le

signal $\overline{EB7}$ .

Dans notre réalisation particulière, il y a au maximum trois octets de huit bits par paquet. Ces octets sont délivrés en parallèle au rythme de l'horloge C0.

Le compteur de bit 45 est un décompteur initialisé à sept, qui décompte de sept à zéro.

Le compteur 45 est synchronisé par l'horloge C0 et son entrée de chargement est validée par un circuit de validation 46 activé par le signal GAP.

Le circuit de validation 46 comporte une bascule D 47, recevant sur son entrée d'horloge H le signal C2. L'entrée de sélection R reçoit le signal GAP. L'entrée de données D reçoit un signal STS génèré par au moins une des sorties du registre à décalage 40.

La porte "OU" 41 permet de délivrer ce signal lorsque l'une au moins des sorties du registre 40 est à l'état haut.

Le circuit de validation 46 comporte également une bascule 48, associée à la bascule 47 pour former un circuit anti-instabilité. La sortie Q de cette bascule 47 est appliquée à l'entrée d'horloge H d'une bascule D 49, activée par le signal GAP, son entrée de donnée étant forcée à "1". Le signal de sortie de cette bascule 49 délivre le signal VA qui valide l'entrée de chargement du compteur 45 par l'intermédiaire d'une porte ET 50.

La porte "ET" 50 est une porte à deux entrées une sortie. L'une des deux entrées reçoit le signal VA tandis que l'autre entrée reçoit le signal de sortie du compteur 45.

Lorsque le compteur 45 a décompté et qu'il est à zéro, sa sortie envoie un zéro à l'entrée de la porte 50 à laquelle elle est reliée. La sortie de la porte est à zéro, et envoie donc un zéro à l'une S1 des deux entrées S1, S2 de chargement du compteur. Le compteur se charge car ces deux entrées de chargement sont à zéro, la deuxième entrée S2 de chargement étant forcée à zéro.

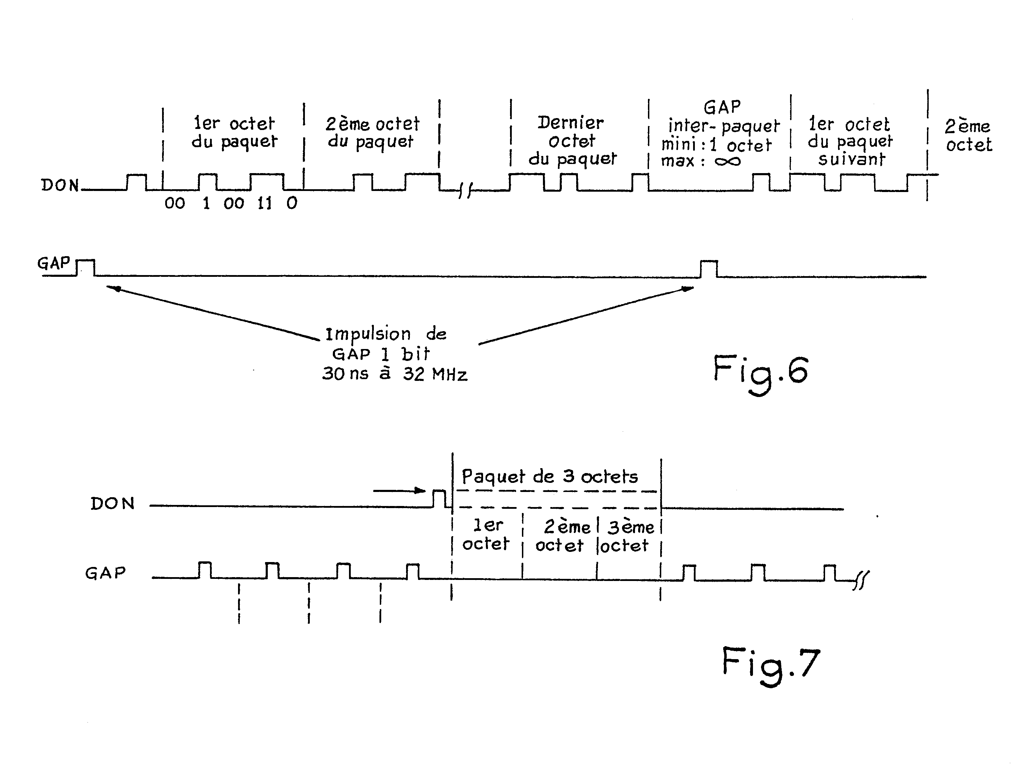

Sur la figure 6, on a représenté séparément, sur une première ligne, le signal DON et sur une deuxième ligne le signal GAP.

Le nombre d'octets par paquet n'a pas été défini volontairement afin de montrer qu'il est variable. En effet, ce nombre est fonction du débit d'information, il est par conséquent plus ou moins limité selon les réalisations, car la vitesse de propagation dans les circuits apporte une limitation.

Sur la figure 7, on a représenté ces même signaux, mais suivant notre réalisation particulière, dans laquelle on a utilisé une logique ECL, qui permet de travailler avec une fréquence de 32 MHz. Le nombre maximum d'octets par paquet est de 3. La largeur des impulsions est de 30 ns.

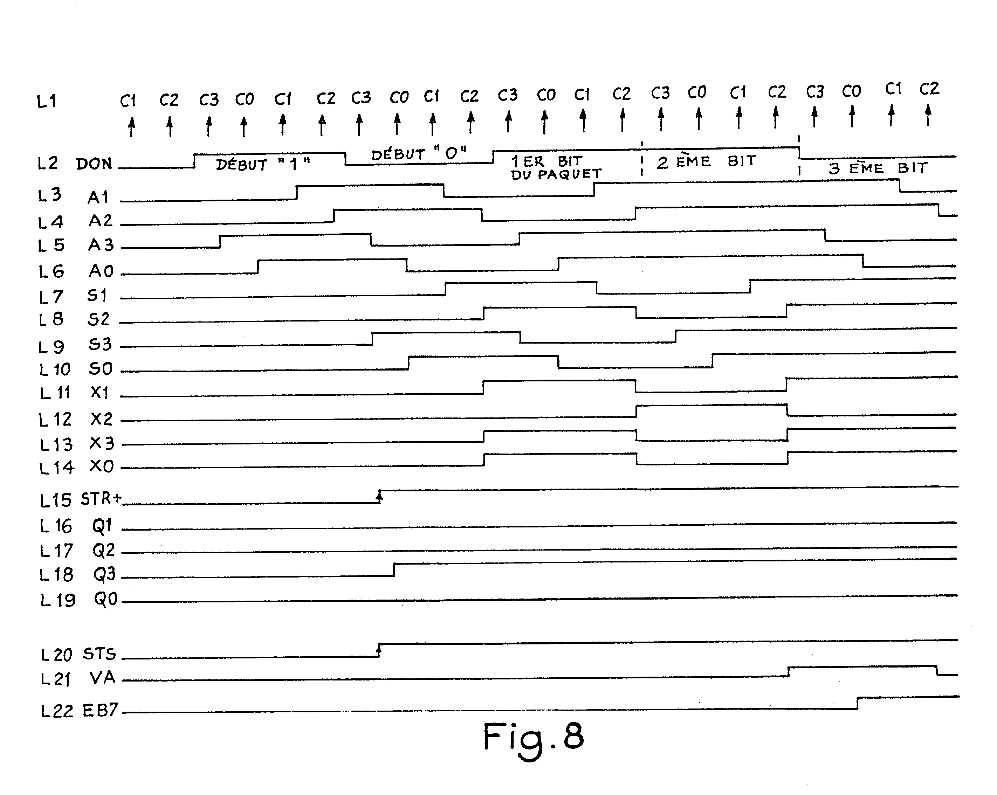

La figure 8 représente un diagramme des temps sur lequel est représenté un ensemble de signaux significatifs.

Sur la première ligne L1 on a représenté les fronts montants des horloges C0-C3.

L2 : représente le signal de données DON. Un élément de début "1" arrive juste après un front montant de l'horloge C2. La durée des bits du paquet est de 30 ns et la fréquence des signaux d'horloge est de 32 MHz dans notre réalisation particulière.

L3 - L6 : représentent respectivement les sorties A1, A2, A3, A0 des bascules 19, 20, 21, 18.

Dans notre réalisation particulière, c'est la bascule 21 qui est activée par l'horloge C3, qui prend en compte, la première, le bit 1 de début.

L7 - L10 : représentent respectivement les sorties S1, S2, S3, S0 des bascules 23, 24, 25, 22.

La bascule 25 prend en compte, la première, le bit 1 de début mais avec un décalage dû au temps de passage dans la bascule 21.

L11 - L14 : représentent les sorties X1, X2, X3, X0 du registre à décalage 40 qui reçoit en entrées les signaux S1, S2, S3, S0. Ce registre est activé par l'horloge C2. Les signaux S1, S3 et S0 sont présents pendant le front montant de l'horloge C2, tandis que le signal S2 n'est présent que pour le front montant suivant de l'horloge C2. Dans ce cas de figure particulier, les sorties X1, X3 et X0 sont donc validées pendant un front montant de l'horloge C2, tandis que la sortie X2 est validée pendant le front montant suivant.

11

L15 : représente le signal STR obtenu à la sortie des portes "OU" 30, 31 et permet de mémoriser le numéro de la première horloge qui a permis de prendre en compte le bit de début.

L16 - L19 : représentent les sorties Q1, Q2, Q3, Q0 des bascules 27, 28, 29, 26. Seule la sortie Q3 est à 1 et indique le numéro de l'horloge (C3) qui a détecté en premier le bit de début de paquet.

L20 : représente le signal STS pris à la sortie de la porte "OU" 41 et qui permet de commander la génération du signal de validation de comptage.

L21 : représente le signal VA de validation de comptage de bit qui est déclenché au moment ou le bit du paquet est présenté à la sortie X3.

L22 : représente le signal EB7 de comptage de bit qui permet de charger le compteur 45 et d'activer les entrées de chargement du registre tampon 44.

La présente invention permet donc d'obtenir une transmission en mode paquet ayant un débit d'information élevé. Ce débit élevé est obtenu par l'utilisation du code NRZ. Les problèmes de synchronisation ont été résolus en utilisant des circuits qui ont permis d'une part de se synchroniser au niveau du bit (circuit 43), et d'autre part de se synchroniser au niveau de l'octet (circuit 44).

12

REVENDICATIONS

1. Emetteur de données en mode paquet, caractérisé en ce qu'il comprend :

- un codeur (100) pour émettre un premier signal (DON) constitué par des paquets de données successifs espacés par un intervalle de temps dont la durée est fonction de la durée d'un élément du paquet, chaque paquet étant précédé par un signal de départ et comportant un nombre entier d'élément, chaque élément étant constitué par un octet ;

- un générateur d'impulsions (101) pour émettre un deuxième signal (SGAP) constitué d'impulsions générées à un rythme donné par une horloge (HO) définissant le débit de la transmission, au moins une impulsion étant émise pendant chaque intervalle de temps séparant deux paquets successifs.

2. Emetteur de données selon la revendication 1, caractérisé en ce que le codeur (100) comprend :

- un multiplexeur (2) pour émettre les octets utiles de chaque paquet et le demi-octet du silence précédant ces paquets, ce demi-octet comprenant le signal de début de chaque paquet ;

- un registre parallèle-série (1) pour recevoir les éléments binaires des octets utiles et les éléments binaires du demi-octet du silence précédant chaque paquet, en parallèle et les délivrer en série.

3. Emetteur de données selon la revendication 1 ou 2, caractérisé en ce que le générateur d'impulsions (101) comprend :

- un registre parallèle-série (3) chargé pour délivrer les impulsions de durée déterminée en série, au rythme de l'horloge (HO) définissant le débit de la transmission ;

- une bascule D (4) pour recevoir les impulsions délivrées par le registre (3), son entrée d'horloge étant activée par le front descendant de la dite horloge (HO) ;

- une porte "ET" (5) pour recevoir les impulsions délivrées par le registre (3) et les impulsions délivrées par la bascule (4) et pour délivrer le deuxième signal (SGAP).

4. Récepteur de données en mode paquet, caractérisé en ce qu'il comprend :

- un circuit de détection de signaux (103) pour recevoir les premiers et deuxièmes signaux (DON, SGAP), discriminer les impulsions de ce signal, prendre en compte ces impulsions à l'aide d'un premier signal d'horloge (C0) et délivrer un troisième signal (GAP) constitué d'impulsions calées sur ce signal d'horloge (C0) ;

- un circuit d'échantillonnage (104) pour recevoir le premier signal (DON), pour recevoir le troisième signal (GAP), et le premier signal d'horloge (C0), un deuxième (C1), un troisième (C2) et un quatrième (C3) signal d'horloge, ces quatre signaux d'horloge étant décalés d'une durée déterminée permettant au circuit d'échantillonnage (104), activé par le troisième signal (GAP), d'échantillonner les données à l'aide des signaux d'horloge (C0-C3) ;

- un circuit de sélection et de mémorisation (105) pour recevoir les données échantillonnées de chaque paquet du premier signal (DON), en série et les délivrer en parallèle au rythme du premier signal d'horloge (C0).

5. Récepteur de données selon la revendication 4, caractérisé en ce que le circuit de détection de signaux (103) comprend :

- une première (12) et une deuxième (13) ligne à retard pour recevoir les premiers et deuxièmes signaux (SGAP, DON) et discriminer les impulsions de ce signal en fonction de leur longueur ;

- une première bascule (14) pour prendre en compte ces impulsions au rythme où elles arrivent ;

- une deuxième (15) et une troisième (16) bascules pour prendre en compte les impulsions délivrées à la sortie de la première bascule (14), et délivrer un signal de détection de paquet (GAP) constitué par des impulsions calées sur les fronts montants du première signal d'horloge (C0).

6. Récepteur de données selon les revendications 4 ou 5, caractérisé en ce que le circuit d'échantillonnage (104) comprend :

- un premier ensemble de bascules D (18-21), chaque bascule étant activée par l'un des signaux d'horloge (C0-C3), pour recevoir à l'entrée de donnée le premier signal (DON), et pour recevoir à l'entrée de remise à zéro le troisième signal (GAP) ;

- un deuxième ensemble de bascules D (22-25) associées respectivement au premier ensemble pour obtenir des sorties stables quelles que soient les entrées, pour recevoir à l'entrée de données respectivement le signal de sortie des bascules du premier ensemble, ces bascules étant activées par le même signal d'horloge activant les bascules auxquelles elles sont associées, pour recevoir également à l'entrée de remise à zéro le troisième signal (GAP), chaque sortie (S0-S3) délivrant le signal de données échantillonnées ;

- un troisième ensemble de bascules D (26-29) pour recevoir à l'entrée de données le signal de sortie respectivement des bascules du deuxième ensemble (22-25) et dont l'entrée d'horloge est activée par un signal d'horloge choisi pour échantillonner le signal, pour permettre ainsi de mémoriser l'état des bascules du deuxième ensemble (22-25) après détection d'un élément de début.

7. Récepteur de données selon l'une quelconque des revendications 4 à 6, caractérisé en ce que le circuit de sélection et mémorisation (105) comprend :

- un circuit de sélection (35) relié aux sorties des bascules (26-29) du troisième ensemble, permettant de ne prendre en compte que l'une des sorties déterminées des bascules de ce troisième ensemble, sélectionnant en même temps le signal d'horloge choisi pour échantillonner le signal de données ;

- un registre à décalage (40) pour recevoir à ses entrées respectivement le signal de sortie des bascules (22-25) du deuxième ensemble, dont l'entrée d'horloge est activée par le signal d'horloge (C2) précédant le signal d'horloge choisi pour l'échantillonnage (3), ce registre délivrant à ses sorties (X0-X3) les bits du paquet détecté ;

- un sélecteur (42) pour recevoir à ses entrées les sorties du registre à décalage (40) et dont les entrées de sélection sont activées par les sorties du circuit de sélection (35) permettant ainsi de délivrer à sa sortie les bits en série du paquet détecté ;

- un registre convertisseur série-parallèle (43) pour recevoir les bits en série du paquet au rythme de l'une des horloges (C0) et les délivrer en parallèle ;

- un registre tampon (44) pour recevoir les bits en parallèle délivrés par le registre convertisseur série-parallèle (43) et se charger sous l'activation d'un signal (EB7) résultant d'un comptage de bit du paquet.

8. Récepteur de données selon l'une quelconque des revendications 4 à 7, caractérisé en ce qu'il comprend en outre :

- un circuit de validation (45) activé par le signal d'horloge (C2) précédant le signal d'horloge (C3) choisi pour l'échantillonnage, pour générer un signal de validation (VA) ;

- un compteur de bit (46) pour recevoir le signal de validation (VA) validant le chargement de ce compteur aux instants significatifs, pour délivrer le signal de commande (EB7) résultant du comptage de bits par paquet permettant de charger le compteur (46) et d'activer les entrées de chargement du registre tampon (44).

Fig.1

0094865

Fig.2

Fig.3

Fig.4

Fig.5

0094865

DON

00 1 00 11 0

1er octet du paquet | 2ème octet du paquet | Dernier octet du paquet | GAP inter-paquet mini:1 octet max: ∞ | 1er octet du paquet suivant | 2ème octet

GAP

Impulsion de GAP 1 bit 30 ns à 32 MHz

Fig.6

DON

Paquet de 3 octets

1er octet | 2ème octet | 3ème octet

GAP

Fig.7

0094865

Fig.8